(19) Europäisches Patentamt
European Patent Office
Office européen des brevets

(11) **EP 2 920 495 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(21) Anmeldenummer: **13789731.0**

(22) Anmeldetag: **28.10.2013**

(51) Int Cl.:
*F16J 15/12* *(2006.01)*    *G01L 9/00* *(2006.01)*

(86) Internationale Anmeldenummer:
**PCT/EP2013/072500**

(87) Internationale Veröffentlichungsnummer:
**WO 2014/075903 (22.05.2014 Gazette 2014/21)**

(54) **DICHTRING UND DRUCKMESSAUFNEHMER MIT MINDESTENS EINEM SOLCHEN DICHTRING**

SEALING RING AND PRESSURE TRANSDUCER WITH AT LEAST ONE SUCH SEALING RING

BAGUE D'ÉTANCHÉITÉ ET CAPTEUR DE PRESSION COMPRENANT AU MOINS UNE TELLE BAGUE D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2012 DE 102012111001**

(43) Veröffentlichungstag der Anmeldung:
**23.09.2015 Patentblatt 2015/39**

(73) Patentinhaber: **Endress+Hauser GmbH+Co. KG
79689 Maulburg (DE)**

(72) Erfinder: **GUGENBERGER, Alexander
79540 Lörrach (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**WO-A1-2011/154209    GB-A- 1 134 096**

**Beschreibung**

Die vorliegende Erfindung betrifft einen Dichtring und einen Druckmessaufnehmer mit mindestens einem solchen Dichtring.

In der Prozessindustrie werden u. a. Medien verarbeitet, denen gängige Elastomere nur bedingt standhalten. Es ist daher üblich, bei medienberührenden Dichtungen auf die ansonsten üblichen Elastomere zu verzichten, falls entsprechende Medien zu erwarten sind. Stattdessen werden durch metallische Dichtungen oder inerte Kunststoffe, insbesondere Fluorpolymere, wie beispielsweise PTFE, FEP oder PFA eingesetzt. Konstruktionen der gegeneinander zu dichtenden Bauteile sind dann den besonderen Eigenschaften der Dichtmaterialien anzupassen. So erfordern beispielsweise metallische Dichtungen in aller Regel große Einspannkräfte um die erforderlichen Flächenpressungen aufzubringen und Fluorpolymerdichtungen müssen konstruktiv elastisch vorgespannt sein, um Wärmeausdehnungsunterschiede zwischen den gewöhnlich metallischen Dichtungspartnern und der Dichtung, thermische Verspannungen in der Konstruktion, sich lockernde Schrauben und ggf. mit den vorgenannten Effekten einhergehende Hystereseerscheinungen sowie Fließen des Dichtstoffs und Fertigungstoleranzen ausgleichen zu können. Siehe z.B. GB-A-1134096.

Daraus ergibt sich ein Problem für die industrielle Prozessmesstechnik, denn die Messgeräte sollen mit einer möglichst kleinen Variantenzahl hinsichtlich der Konstruktion für die unterschiedlichsten Prozessmedien geeignet sein. Da meistens Elastomerdichtungen ausreichen, ist es nicht gerechtfertigt, alle Geräte mit einer so aufwändigen Konstruktion zu versehen, dass sie thermoplastische Dichtungen ausreichend elastisch vorspannen können. Siehe WO-A-2011/154209.

Die Offenlegungsschrift DE-A-10 2012102834 offenbart einen metallischen Dichtring, mit einem z-förmigen Querschnitt, wobei die Dichtflächen an den Stirnseiten des Dichtrings mit einem Polymer, insbesondere PTFE beschichtet sind. Der z-förmige Querschnitt bewirkt eine axiale Elastizität des Dichtrings, mit der sich die Dichtflächen axial vorspannen lassen. Der beschriebene metallische Dichtring führt jedoch zu temperaturabhängigen Schwankungen der axialen Einspannkräfte. Zudem ist die Herstellung des metallischen Dichtrings teuer.

Es ist daher die Aufgabe der vorliegenden Erfindung einen weiteren Dichtring und einen Druckmessaufnehmer mit einem solchen Dichtring bereitzustellen, der chemisch beständige Werkstoffe aufweist, und die Effekte großer thermischer Ausdehnung von organischen Werkstoffen lindert.

Die Aufgabe wird gelöst durch den Dichtring gemäß dem unabhängigen Patentanspruch 1 und den Druckmessaufnehmer gemäß dem unabhängigen Patentanspruch 11.

Der erfindungsgemäße Dichtring zum Dichten in einem axial eingespannten Zustand umfasst: ein ringförmiges Dichtungselement, welches einen ersten Werkstoff mit einem ersten linearen Wärmeausdehnungskoeffizienten $\alpha_1$ aufweist; eine ringförmige Führungsanordnung, die mindestens eine radiale Schranke für eine Äquatorialringfläche eines von dem Dichtungselement einnehmbaren Volumens definiert, wobei der Betrag der Äquatorialringfläche einen effektiven Flächenwärmeausdehnungskoeffizienten $\beta$ aufweist, der mehr als das Doppelte, insbesondere nicht weniger als das Zweieinhalbfache des ersten linearen Wärmeausdehnungskoeffizienten beträgt, so dass ein effektiver axialer Wärmeausdehnungskoeffizient des ringförmigen Dichtungselements kleiner ist als der erste lineare Wärmeausdehnungskoeffizient, insbesondere nicht mehr als die Hälfte des ersten linearen Ausdehnungskoeffizienten bevorzugt nicht mehr als 30 ppm/K, und besonders bevorzugt nicht mehr als 20 ppm/K beträgt.

In einer Weiterbildung der Erfindung weist die Führungsanordnung einen inneren radialen Führungsring aufweist, wobei der innere Führungsring eine innere radiale Begrenzungsfläche für das Dichtungselement aufweist, wobei der innere Führungsring einen zweiten Werkstoff mit einem zweiten lineare Wärmeausdehnungskoeffizienten $\alpha_2$ aufweist, wobei die Führungsanordnung weiterhin einen äußeren radialen Führungsring aufweist, wobei der äußere Führungsring eine äußere radiale Begrenzungsfläche für das Dichtungselement aufweist, wobei der äußere Führungsring einen dritten Werkstoff mit einem dritten linearen Wärmeausdehnungskoeffizienten $\alpha_3$ aufweist, wobei der zweite Wärmeausdehnungskoeffizient $\alpha_2$ kleiner ist als der dritte Wärmeausdehnungskoeffizient $\alpha_3$.

In einer Weiterbildung der Erfindung ist der dritte Wärmeausdehnungskoeffizient $\alpha_2$ kleiner als der erste Wärmeausdehnungskoeffizient $\alpha_1$, wobei ein einem effektiver äußerer Radius $R_a$ der äußeren Begrenzungsfläche und ein effektiver innerer Radius $R_a$ der inneren Begrenzungsfläche so gewählt sind, dass die folgende Beziehung über einen angestrebten Temperatureinsatzbereich so gut wie möglich erfüllt ist:

$$[(R_a \cdot F_3)^2 - (R_i \cdot F_2)^2] \cdot F_3 = [R_a{}^2 - R_i{}^2] \cdot F_1{}^3 \qquad (I)$$

Hierbei die $F_i$ gegeben als $(1 + \alpha_i \cdot \Delta T)$, wobei $\Delta T$ die Abweichung von einer Referenztemperatur $T_0$, beispielsweise $T_0 = 300$ K, bedeutet. Für das Verhältnis der Radien gilt dann unter Berücksichtigung der Tatsache dass der Wärmeausdehnungsterm $\alpha_i \cdot \Delta T$ erheblich kleiner als 1 ist:

$$\frac{R_a}{R_i} - 1 = K \cdot \left[ \sqrt{\frac{\alpha_1 - \frac{2}{3}\alpha_2 - \frac{1}{3}\alpha_3}{\alpha_1 - \alpha_3}} - 1 \right] \qquad \text{(II)},$$

wobei $0{,}67 < K < 1{,}5$ insbesondere $0{,}8 < K < 1{,}25$, vorzugsweise $0{,}9 < K < 1{,}1$ und besonders bevorzugt $0{,}95 < K < 1{,}05$.

In einer Weiterbildung der Erfindung umfasst der zweite Werkstoff einen keramischen Werkstoff oder Glas, wobei der zweite Wärmeausdehnungskoeffizient $\alpha_2$ beispielsweise nicht mehr als 8 ppm/K, insbesondere nicht mehr als 5 ppm/K, und bevorzugt nicht mehr als 3,5 ppm/K beträgt.

In einer Weiterbildung der Erfindung umfasst der dritte Werkstoff einen metallischen Werkstoff, insbesondere Edelstahl, wobei der dritte Wärmeausdehnungskoeffizient $\alpha_3$ beispielsweise nicht weniger als 14 ppm/K, insbesondere nicht weniger als 15 ppm/K, und bevorzugt nicht weniger als 16 ppm/K beträgt.

In einer Weiterbildung der Erfindung weist der erste Werkstoff ein Polymer, wobei der zweite Wärmeausdehnungskoeffizient $\alpha_2$ beispielsweise nicht weniger als 80 ppm/K und nicht mehr als 200 ppm/K, insbesondere nicht mehr als 150 ppm/K, beträgt. In einer Ausgestaltung umfasst der erste Werkstoff ein Fluorpolymer, insbesondere PTFE oder PFA.

In einer Weiterbildung der Erfindung umfasst der erste Werkstoff ein Elastomer, wobei die Führungsanordnung einen inneren radialen Führungsring aufweist, wobei der innere Führungsring eine innere radiale Begrenzungsfläche für das Dichtungselement aufweist, wobei der innere Führungsring einen zweiten Werkstoff mit einem zweiten linearen Wärmeausdehnungskoeffizienten $\alpha_2$ aufweist, der kleiner ist als der erste linearen Wärmeausdehnungskoeffizienten $\alpha_1$, wobei der Dichtring für einen Temperaturbereich bis zu einer Maximaltemperatur $T_{max}$ spezifiziert ist, wobei der innere Führungsring das Dichtungselement radial vorspannt, dass das Dichtungselement mindestens bis zu einer Temperatur von Temperatur $T_{max}$ - 20 K, vorzugsweise bis $T_{max}$ an dem Dichtungselement anliegt.

Der erfindungsgemäße Druckmessaufnehmer umfasst
einen Drucksensor mit einem Drucksensorkörper, welcher mindestens eine erste Druckempfangsfläche aufweist, die mit einem ersten Druck beaufschlagbar ist, wobei der Drucksensorkörper weiterhin mindestens eine erste Dichtungsfläche aufweist, welche die erste Druckempfangsfläche ringförmig umgibt, und mit einem Wandler, zum Bereitstellen eines Signals, welches von einer Differenz zwischen dem an der Druckempfangsfläche anstehenden ersten Druck und einem Referenzdruck abhängt;
mindestens einen ersten Anschlusskörper, der eine erste Drucköffnung und eine erste Dichtungsgegenfläche aufweist, wobei die erste Dichtungsgegenfläche die erste Drucköffnung ringförmig umgibt; und
mindestens einen ersten erfindungsgemäßen Dichtring, wobei der erste Dichtring zwischen der ersten Dichtungsfläche und der ersten Dichtungsgegenfläche dichtend axial eingespannt ist, so dass die erste Druckempfangsfläche durch die erste Drucköffnung mit einem ersten Druck beaufschlagbar ist.

In einer Weiterbildung der Erfindung weisen der Prozessanschlusskörper und der Sensorkörper jeweils einen metallischen Werkstoff auf, insbesondere einen Werkstoff dessen Wärmeausdehnungskoeffizient um nicht mehr als 4 ppm/K, vorzugsweise nicht mehr als 2 von dem dritten Werkstoff des erfindungsgemäßen Dichtrings abweicht.

In einer Weiterbildung der Erfindung ist ein axialer Abstand zwischen der ersten Dichtungsfläche und der ersten Dichtungsgegenfläche gegeben, der einen effektiven linearen Wärmeausdehnungskoeffizienten aufweist, welcher um nicht mehr als 8 ppm/K, vorzugsweise nicht mehr als 4 ppm/K, und besonders bevorzugt nicht mehr als 2 ppm/K von dem effektiven axialen Wärmeausdehnungskoeffizienten des ringförmigen Dichtungselements.

In einer Weiterbildung der Erfindung ist der Druckmessaufnehmer ein Absolut- oder Relativdruckmessaufnehmer, wobei der Referenzdruck Vakuumdruck bzw. Atmosphärendruck umfasst.

In einer anderen Weiterbildung der Erfindung ist der Druckmessaufnehmer ein Differenzdruckmessaufnehmer, wobei der Drucksensorkörper, weiterhin eine zweite Druckempfangsfläche aufweist, die mit einem zweiten Druck beaufschlagbar ist, wobei der Drucksensorkörper weiterhin eine erste zweite Dichtungsfläche aufweist, welche die zweite Druckempfangsfläche ringförmig umgibt, wobei der Wandler, zum Bereitstellen eines Signals, welches von einer Differenz zwischen dem an der ersten Druckempfangsfläche anstehenden ersten Druck und dem der zweiten Druckfläche anstehenden Referenzdruck abhängt;
wobei der Differenzdruckmessaufnehmer weiterhin eine zweite Drucköffnung in einem Anschlusskörper und eine zweite Dichtungsgegenfläche aufweist, wobei zweite Dichtungsgegenfläche die zweite Drucköffnung ringförmig umgibt; und
wobei der Differenzdruckmessaufnehmer weiterhin einen zweiten erfindungsgemäßen Dichtring aufweist, wobei der zweite Dichtring zwischen der zweiten Dichtungsfläche und der zweiten Dichtungsgegenfläche dichtend axial eingespannt ist, so dass die zweite Druckempfangsfläche durch die zweite Drucköffnung mit einem zweiten Druck als Referenzdruck beaufschlagbar ist.

Die zweite Drucköffnung und die zweite Dichtungsgegenfläche sind gemäß einer Weiterbildung der Erfindung in koplanarer Anordnung zur ersten Drucköffnung und zur ersten Dichtungsgegenfläche am ersten Anschlusskörper angeordnet.

In einer anderen Weiterbildung der Erfindung weist der Differenzdruckmessaufnehmer einen zweiten Anschlusskörper auf, welcher die zweite Drucköffnung und die zweite

Dichtungsgegenfläche aufweist, wobei der Sensorkörper zwischen dem ersten Anschlusskörper und dem zweiten Sensorkörper axial eingespannt ist.

Die Erfindung wird nun anhand der in den Zeichnungen dargestellten Ausführungsbeispiele erläutert.

Es zeigt:

Fig. 1:    einen Längsschnitt durch ein Ausführungsbeispiel eines erfindungsgemäßen Dichtrings;

Fig. 2.    einen Längsschnitt durch ein Ausführungsbeispiel eines erfindungsgemäßen Absolutdruckmessaufnehmers; und

Fig. 3.    einen schematischen Längsschnitt durch ein Ausführungsbeispiel eines erfindungsgemäßen Differenzdruckmessaufnehmers.

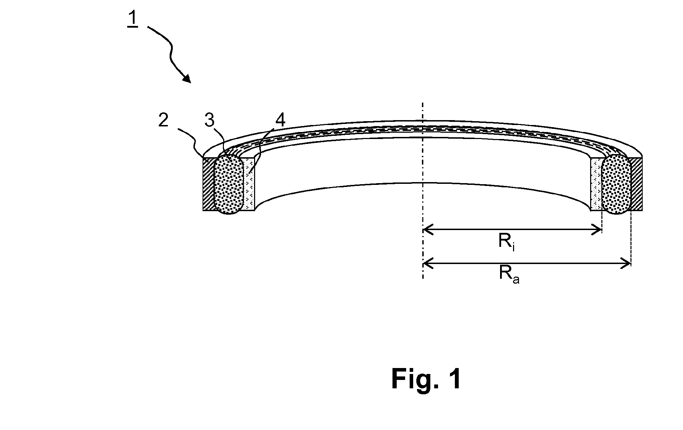

Der in Fig. 1 dargestellte Dichtring 1 zum Dichten in einem axial eingespannten Zustand, umfasst einen äußeren Führungsring 2, ein ringförmiges Dichtungselement 3, und einen inneren Führungsring 4, wobei der äußere Führungsring 2 und der innere Führungsring 4 eine Führungsanordnung für das Dichtungselement 3 bilden. Das Dichtungselement umfasst ein Polymer, insbesondere ein Fluorpolymer, welches zwar hervorragende Medienbeständigkeit aufweist, aber mechanisch bzw. thermomechanisch zu wünschen übrig lässt. Einerseits fließt es unter starken Flächenpressungen und andererseits weist es einen großen ersten Wärmeausdehnungskoeffizienten $\alpha_1$ auf, beispielsweise etwa 100 ppm/K.

Die Führungsanordnung stellt jedoch durch die beiden Führungsringe zwei ringförmige radiale Schranken bereit, zwischen denen die Fließfähigkeit bzw. Nachgiebigkeit des Fluorpolymers zu einem Vorteil wird. Der innere Führungsring 4 weist nämlich einen Werkstoff mit einem zweiten linearen Wärmeausdehnungskoeffizienten $\alpha2$ auf, der kleiner ist als der ein dritter linearer Wärmeausdehnungskoeffizient $\alpha_3$ eines dritten Materials, welches der äußere Führungsring 2 aufweist. Konkret kann beispielsweise ein Edelstahl des Typs 1.4435 für den äußeren Führungsring 2 verwendet werden, so dass der dritte lineare Wärmeausdehnungskoeffizient $\alpha_3$ dann etwa 17,5 ppm/K beträgt. Als Werkstoff für den inneren Führungsring 4 kann beispielsweise ein Borosilikatglas (Borofloat) verwendet werden, so dass der zweite lineare Wärmeausdehnungskoeffizient $\alpha_2$ etwa 3,25 ppm/K beträgt.

Eine Querschnittsfläche A des Dichtungselements 3 in einer Mittenebene des Dichtrings 1 ist dann gegeben als $A = pi* (R_a^2 - R_i^2)$, wobei $R_a$ der durch den äußeren Führungsring 2 begrenzte Außenradius des Dichtungselements 3 ist, und wobei $R_i$ der durch den inneren Führungsring 4 begrenzte Innenradius des Dichtungselements 3 ist.

Mit den obigen Materialien folgt dann mit der obigen Gleichung (II) und K = 1 als Dimensionierungsvorschrift bei Referenztemperatur: $R_a/R_i = 1{,}056$. Wenn also beispielsweise der Innenradius $R_i$ des Dichtungselements 3, welcher durch den Außenradius des inneren Führungsings 4 gegeben ist, beispielsweise einen Wert von 15 mm aufweist, so beträgt der Außenradius $R_a$ des Dichtungselements 3, der durch den Innenradius des äußeren Führungsring 2 definiert ist, 15,84 mm. Das Dichtungselement 3 füllt also einen Ringspalt von 0,8 mm aus.

In diesem Fall entspricht dann der effektive axiale Ausdehnungskoeffizient des Dichtungselements 3 dem dritten linearen Ausdehnungskoeffizienten $\alpha_2$ des äußeren Führungsrings 2. Ein axiales Quellen des Dichtungselements 3 in Bezug auf den äußeren Führungsring 2 ist damit weitgehend verhindert.

Der erfindungsgemäße Dichtring kann vorteilhaft in Druckmessaufnehmenr eingesetzt werden.

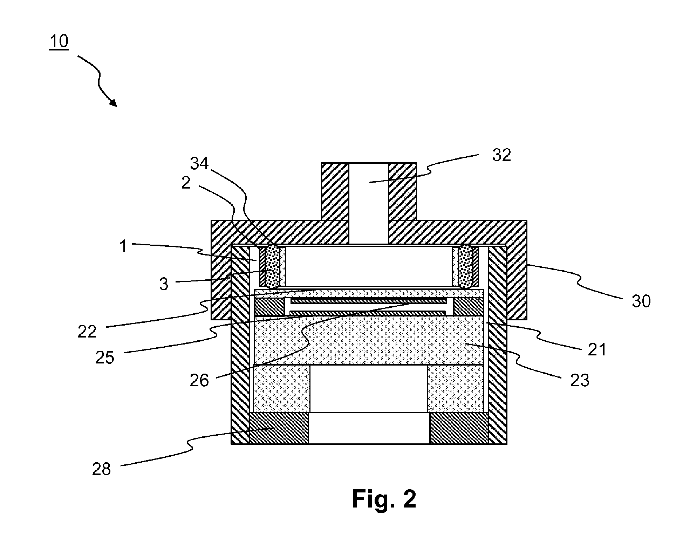

Der in Fig. 2 dargestellte Absolutdruckmessaufnehmer 10 umfasst in einem metallischen zylindrischen Gehäuse 20 eine keramische Druckmesszelle 21. welche beispielsweise einen Sensorkörper im Sinne der Erfindung bildet. Die Druckmesszelle 21 umfasst eine Messmembran 22 und einen Grundkörper 23, wobei die Messmembran 22 stirnseitig mit dem Grundkörper verbunden ist, die Die Druckmesszelle umfasst einen kapazitiven Wandler zum Erfassen einer druckabhängige Verformung der Messmembran, wobei der kapazitive Wandler mindestens eine erste Elektrode 25 an der Messmembran 22 und mindestens eine zweite Elektrode 26 an einem Grundkörper 23 umfasst, wobei die beiden Elektroden einander zugewandt sind. Die Druckmesszelle 21 ist in dem Gehäuse 20 mit einem Einspannring 28 rückseitig abgestützt und axial eingespannt, wobei die Messmembran 22 einem Anschlusskörper 30 zugewandt ist, welcher mit dem Gehäuse 20 verschraubt ist. Der Anschlusskörper 30 umfasst eine zentrale axiale Bohrung 32, welche eine Druckeinlassöffnung bildet, durch welche die Messmembran 22 mit einem Druck beaufschlagbar ist. Zwischen der Messmembran 22, welche also eine Druckempfangsfläche bildet, und dem Anschlusskörper 30 ist ein erfindungsgemäßer Dichtring 1 axial eingespannt, wobei der Dichtring 1 an einem durch eine Fügestelle zwischen der Messmembran 22 und dem Grundkörper 23 unterstützten Randbereich der Messmembran 22 anliegt, welche Randbereich eine Dichtungsfläche bildet, und wobei ein der Dichtungsfläche gegenüberliegender ringförmiger Oberflächenbereich des Anschlusskörpers 30 eine Anschlussgegenfläche bildet. Das Dichtungselement 3 des Dichtrings 1, welches ein Fluorpolymer umfasst, weist die gleiche effektive axiale thermische Ausdehnung auf wie der äußere Führungsring 2, der Edelstahl aufweist. Damit ist ein thermisches Quellen oder Schrumpfen des Dichtelements 3 bezüglich des äußeren Führungsrings 2 weitgehend verhindert, wodurch die Dichtwirkung des Dichtrings 1 langfristig erhalten bleibt.

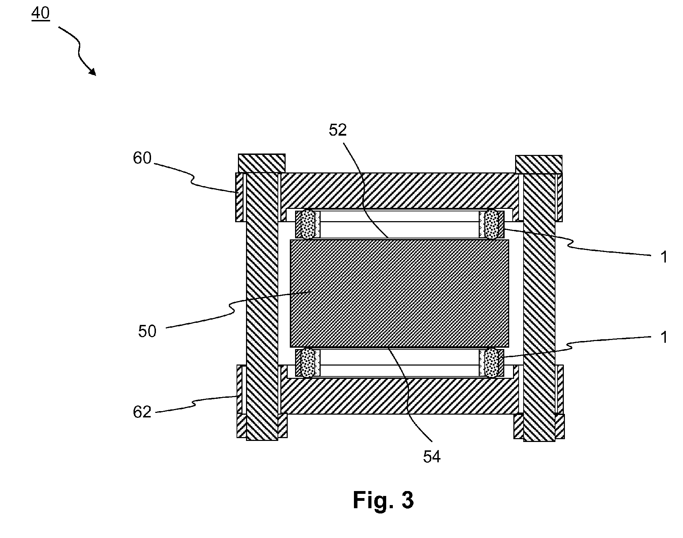

Das in Fig. 3 dargestellte Ausführungsbeispiel eines Differenzdruckmessaufnehmers 40 umfasst einen zylindrischen Sensorkörper 50 mit einer ersten Stirnseite 52 und einer zweiten Stirnseite 54, wobei der Sensorkörper 50 zwischen zwei Prozessanschlussflanschen 60, 62 axial eingespannt ist. Zwischen den Prozessanschlussflanschen und den beiden Stirnseiten 52, 54 ist jeweils ein erfindungsgemäßer Dichtring 1 axial eingespannt. Der von den Dichtringen 1 umschlossene Bereich der Stirnseiten weist jeweils eine hier nicht näher dargestellte Trennmembran auf, welche eine Druckempfangsfläche bildet, wobei der auf die Trennmembran einwirkende Druck im Innern des Sensorkörpers, hydraulisch zu einem ebenfalls nicht dargestellten Differenzdruckmesswandler übertragen wird, dessen Signal von einer Differenz zwischen einem an der ersten Stirnseite 52 anstehenden ersten Druck und einem an der zweiten Stirnseite 54 anstehenden zweiten Druck abhängt. Die beiden Prozessanschlussflansche 60, 62 weisen jeweils eine hier nicht dargestellte Drucköffnung auf, durch welche jeweils ein Druck in einen zwischen dem Dichtring 1, dem Prozessanschlussflansch und dem Sensorkörper gebildeten Raum zuführbar ist.

## Patentansprüche

1. Dichtring zum Dichten in einem axial eingespannten Zustand, umfassend:

ein ringförmiges Dichtungselement, welches einen ersten Werkstoff mit einem ersten linearen Wärmeausdehnungskoeffizienten $\alpha_1$ aufweist,
eine ringförmige Führungsanordnung, die mindestens eine radiale Schranke für eine Äquatorialringfläche eines von dem Dichtungselement einnehmbaren Volumens definiert, wobei der Betrag der Äquatorialringfläche einen effektiven Flächenwärmeausdehnungskoeffizienten $\beta$ aufweist, der mehr als das Doppelte, insbesondere nicht weniger als das Zweieinhalbfache des ersten linearen Wärmeausdehnungskoeffizienten beträgt,
so dass ein effektiver axialer Wärmeausdehnungskoeffizient des ringförmigen Dichtungselements kleiner ist als der erste lineare Wärmeausdehnungskoeffizient, insbesondere nicht mehr als die Hälfte des ersten linearen Ausdehnungskoeffizienten bevorzugt nicht mehr als 30 ppm/K, und besonders bevorzugt nicht mehr als 20 ppm/K beträgt.

2. Dichtring nach Anspruch 1,
wobei die Führungsanordnung einen inneren radialen Führungsring aufweist,
wobei der innere Führungsring eine innere radiale Begrenzungsfläche für das Dichtungselement aufweist,
wobei der innere Führungsring einen zweiten Werkstoff mit einem zweiten lineare Wärmeausdehnungskoeffizienten $\alpha_2$ aufweist,
wobei die Führungsanordnung weiterhin einen äußeren radialen Führungsring aufweist,
wobei der äußere Führungsring eine äußere radiale Begrenzungsfläche für das Dichtungselement aufweist,
wobei der äußere Führungsring einen dritten Werkstoff mit einem dritten linearen Wärmeausdehnungskoeffizienten $\alpha_3$ aufweist, wobei
der zweite Wärmeausdehnungskoeffizient $\alpha_2$ kleiner ist als der dritte Wärmeausdehnungskoeffizient $\alpha_3$.

3. Dichtring nach Anspruch 2,
wobei der dritte Wärmeausdehnungskoeffizient $\alpha_3$ kleiner ist als der erste Wärmeausdehnungskoeffizient $\alpha_1$,
wobei zwischen einem effektiven äußeren Radius $R_a$ der äußeren Begrenzungsfläche und einem effektiven inneren Radius $R_a$ der inneren Begrenzungsfläche die folgende Beziehung gilt:

$$\frac{R_a}{R_i} - 1 = K \cdot \left[ \sqrt{\frac{\alpha_1 - \frac{2}{3}\alpha_2 - \frac{1}{3}\alpha_3}{\alpha_1 - \alpha_3}} - 1 \right]$$

wobei 0,67 < K < 1,5 insbesondere 0,8 < K < 1,25, vorzugsweise 0,9 < K < 1,1 und besonders bevorzugt 0,95 < K < 1,05.

4. Dichtring nach Anspruch 2, oder 3, wobei der zweite Werkstoff einen keramischen Werkstoff oder Glas umfasst, und/oder wobei der zweite Wärmeausdehnungskoeffizient $\alpha_2$ nicht mehr als 8 ppm/K, insbesondere nicht mehr als 5 ppm/K, und bevorzugt nicht mehr als 3,5 ppm/K beträgt.

5. Dichtring nach Anspruch 2, 3 oder 4, wobei der dritte Werkstoff einen metallischen Werkstoff umfasst, insbesondere Edelstahl, und/oder wobei der dritte Wärmeausdehnungskoeffizient $\alpha_3$ nicht weniger als 14 ppm/K, insbesondere nicht weniger als 15 ppm/K, und bevorzugt nicht weniger als 16 ppm/K beträgt.

6. Dichtring nach einem der vorhergehenden Ansprüche, wobei der erste Werkstoff ein Polymer aufweist, und/oder wobei der zweite Wärmeausdehnungskoeffizient $\alpha_2$ nicht weniger als 80 ppm/K und nicht mehr als 200 ppm/K, insbesondere nicht mehr als 150 ppm/K, beträgt.

7. Dichtring nach Anspruch 6, wobei der erste Werkstoff ein Fluorpolymer, insbesondere PTFE oder PFA umfasst.

8. Dichtring nach Anspruch 1 wobei der erste Werkstoff ein Elastomer umfasst,
   wobei die Führungsanordnung einen inneren radialen Führungsring aufweist,
   wobei der innere Führungsring eine innere radiale Begrenzungsfläche für das Dichtungselement aufweist,
   wobei der innere Führungsring einen zweiten Werkstoff mit einem zweiten linearen Wärmeausdehnungskoeffizienten $\alpha_2$ aufweist, der kleiner ist als der erste linearen Wärmeausdehnungskoeffizienten $\alpha_1$,
   wobei der Dichtring für einen Temperaturbereich bis zu einer Maximaltemperatur $T_{max}$ spezifiziert ist,
   wobei der innere Führungsring das Dichtungselement radial vorspannt, dass das Dichtungselement mindestens bis zu einer Temperatur von Temperatur $T_{max}$ - 20 K, vorzugsweise bis $T_{max}$ an dem Dichtungselement anliegt.

9. Druckmessaufnehmer, umfassend:

   einen Drucksensor mit
   einem Drucksensorkörper, welcher mindestens eine erste Druckempfangsfläche aufweist, die mit einem ersten Druck beaufschlagbar ist, wobei der Drucksensorkörper weiterhin mindestens eine erste Dichtungsfläche aufweist, welche die erste Druckempfangsfläche ringförmig umgibt, und
   mit einem Wandler, zum Bereitstellen eines Signals, welches von einer Differenz zwischen dem an der Druckempfangsfläche anstehenden ersten Druck und einem Referenzdruck abhängt;
   mindestens einen ersten Anschlusskörper, der eine erste Drucköffnung und eine erste Dichtungsgegenfläche aufweist, wobei die erste Dichtungsgegenfläche die erste Drucköffnung ringförmig umgibt; und
   mindestens einen ersten Dichtring nach einem der Ansprüche 1 bis 8, wobei der erste Dichtring zwischen der ersten Dichtungsfläche und der ersten Dichtungsgegenfläche dichtend axial eingespannt ist, so dass die erste Druckempfangsfläche durch die erste Drucköffnung mit einem ersten Druck beaufschlagbar ist.

10. Druckmessaufnehmer nach Anspruch 9, wobei der Anschlusskörper und der Sensorkörper jeweils einen metallischen Werkstoff aufweisen, insbesondere einen Werkstoff dessen Wärmausdehnungskoeffizient um nicht mehr als 4 ppm/K, vorzugsweise nicht mehr als 2 von dem dritten Werkstoff des erfindungsgemäßen Dichtrings abweicht.

11. Druckmessaufnehmer nach Anspruch 9 oder 10, wobei ein axialer Abstand zwischen der ersten Dichtungsfläche und der ersten Dichtungsgegenfläche gegeben ist, der einen effektiven linearen Wärmeausdehnungskoeffizienten aufweist, welcher um nicht mehr als 8 ppm/K, vorzugsweise nicht mehr als 4 ppm/k, und besonders bevorzugt nicht mehr als 2 ppm/k von dem effektiven axialen Wärmeausdehnungskoeffizienten des ringförmigen Dichtungselements abweicht.

12. Druckmessaufnehmer nach einem der Ansprüche 9 bis 11, welcher ein Absolut- oder Relativdruckmessaufnehmer ist, wobei der Referenzdruck Vakuumdruck bzw. Atmosphärendruck umfasst.

13. Druckmessaufnehmer nacheinem der Ansprüche 9 bis 11, welcher ein Differenzdruckmessaufnehmer ist, wobei der Drucksensorkörper, weiterhin eine zweite Druckempfangsfläche aufweist, die mit einem zweiten Druck beaufschlagbar ist, wobei der Drucksensorkörper weiterhin eine erste zweite Dichtungsfläche aufweist, welche die zweite Druckempfangsfläche ringförmig umgibt, wobei der Wandler, zum Bereitstellen eines Signals, welches von einer Differenz zwischen dem an der ersten Druckempfangsfläche anstehenden ersten Druck und dem der zweiten Druckfläche anstehenden Referenzdruck abhängt;
   wobei der Differenzdruckmessaufnehmer weiterhin eine zweite Drucköffnung in einem Anschlusskörper und eine zweite Dichtungsgegenfläche aufweist, wobei zweite Dichtungsgegenfläche die zweite Drucköffnung ringförmig umgibt; und
   wobei der Differenzdruckmessaufnehmer weiterhin einen zweiten Dichtring nach einem der Ansprüche 1 bis 8 aufweist, wobei der zweite Dichtring zwischen der zweiten Dichtungsfläche und der zweiten Dichtungsgegenfläche dichtend axial eingespannt ist, so dass die zweite Druckempfangsfläche durch die zweite Drucköffnung mit einem zweiten Druck als Referenzdruck beaufschlagbar ist.

14. Differenzdruckmessaufnehmer nach Anspruch 13, wobei die zweite Drucköffnung und die zweite Dichtungsgegenfläche in koplanarer Anordnung zur ersten Drucköffnung und zur ersten Dichtungsgegenfläche am ersten Anschlusskörper angeordnet sind.

**15.** Differenzdruckmessaufnehmer nach Anspruch 13, der weiterhin einen zweiten Anschlusskörper aufweist, welcher die zweite Drucköffnung und die zweite Dichtungsgegenfläche aufweist, wobei der Sensorkörper zwischen dem ersten Anschlusskörper und dem zweiten Sensorkörper axial eingespannt ist.

**Claims**

**1.** Sealing ring designed to seal in an axially clamped state, comprising:

an annular sealing element which has a first material with a first linear thermal expansion coefficient $\alpha_1$,
an annular guide arrangement, which defines at least a radial barrier for an equatorial annular surface of a volume which the sealing element can occupy, wherein the extent of the equatorial annular surface has an effective area thermal expansion coefficient $\beta$ which is more than twice, in particular not more than two and a half times, the first linear thermal expansion coefficient,
such that an effective axial thermal expansion coefficient of the annular sealing element is smaller than the first linear thermal expansion coefficient, particularly is not more than half the first linear expansion coefficient, preferably not more than 30 ppm/K and particularly preferably not more than 20 ppm/K.

**2.** Sealing ring as claimed in Claim 1,
wherein the guide arrangement has an inner radial guide ring,
wherein the inner guide ring has an inner radial boundary surface for the sealing element,
wherein the inner guide ring has a second material with a second linear thermal expansion coefficient $\alpha_2$,
wherein the guide arrangement further comprises an outer radial guide ring, wherein the outer guide ring has an outer radial boundary surface for the sealing element,
wherein the outer guide ring has a third material with a third linear thermal expansion coefficient $\alpha_3$, wherein the second thermal expansion coefficient $\alpha_2$ is less than the third thermal expansion coefficient $\alpha_3$.

**3.** Sealing ring as claimed in Claim 2,
wherein the third thermal expansion coefficient $\alpha_3$ is less than the first thermal expansion coefficient $\alpha_1$,
wherein the following relation applies between an effective outer radius $R_a$ of the outer boundary surface and an effective inner radius $R_i$ of the inner boundary surface:

$$R_a/R_i - 1 = K \cdot [(\text{ROOT}\,(\alpha_1 - 2/3\alpha_2 - 1/3\alpha_3)\,/\,(\alpha_1 - \alpha_3)) - 1]$$

where $0.67 < K < 1.5$, particularly $0.8 < K < 1.25$, preferably $0.9 < K < 1.1$ and particularly preferably $0.95 < K < 1.05$.

**4.** Sealing ring as claimed in Claim 2 or 3, wherein the second material comprises a ceramic material or glass, and/or wherein the second thermal expansion coefficient $\alpha_2$ is not more than 8 ppm/K, particularly not more than 5 ppm/K and preferably not more than 3.5 ppm/K.

**5.** Sealing ring as claimed in Claim 2, 3 or 4, wherein the third material comprises a metallic material, particularly stainless steel, and/or wherein the third thermal expansion coefficient $\alpha_3$ is not less than 14 ppm/K, particularly not less than 15 ppm/K and preferably not less than 16 ppm/K.

**6.** Sealing ring as claimed in one of the previous claims, wherein the first material comprises a polymer, and/or wherein the second thermal expansion coefficient $\alpha_2$ is not less than 80 ppm/K and not more than 200 ppm/K, particularly not more than 150 ppm/K.

**7.** Sealing ring as claimed in Claim 6, wherein the first material is a fluoropolymer, particularly PTFE or PFA.

**8.** Sealing ring as claimed in Claim 1, wherein the first material comprises an elastomer,
wherein the guide arrangement has an inner radial guide ring,
wherein the inner guide ring has an inner radial boundary surface for the sealing element,
wherein the inner guide ring has a second material with a second linear thermal expansion coefficient $\alpha_2$, which is

less than the first linear thermal expansion coefficient $\alpha_1$,

wherein the sealing ring is specified for a temperature range up to a maximum temperature $T_{max}$,

wherein the inner guide ring pretensions the sealing element in a radial manner in such a way that the sealing element rests on the sealing element at least up to a temperature $T_{max}$ - 20 K, preferably up to a temperature $T_{max}$,

9. Pressure sensor, comprising:

a pressure sensing element with

a pressure sensor body, which has at least a first pressure reception surface to which a first pressure can be applied, wherein the pressure sensor body further comprises a first sealing surface which surrounds the first pressure reception surface in an annular manner, and

with a transducer designed to provide a signal which depends on a difference between the first pressure present at the pressure reception surface and a reference pressure,

at least a first connection body which has a first pressure opening and a first sealing counterface, wherein the first sealing counterface surrounds the first pressure opening in an annular manner, and

at least a first sealing ring as claimed in one of the Claims 1 to 8, wherein the first sealing ring is clamped in a sealing, axial manner between the first sealing surface and the first sealing counterface, in such a way that a first pressure can be applied to the first pressure reception surface through the first pressure opening.

10. Pressure sensor as claimed in Claim 9, wherein the connection body and the sensor body each has a metallic material, particularly a material whose thermal expansion coefficient deviates by no more than 4 ppm/K, preferably by no more than 2 ppm/K, from the third material of the sealing ring as defined in the invention.

11. Pressure sensor as claimed in Claim 9 or 10, wherein there is an axial distance between the first sealing surface and the first sealing counterface, said axial distance having an effective linear thermal expansion coefficient which deviates by not more than 8 ppm/K, preferably not more than 4 ppm/K, and particularly preferably by not more than 2 ppm/K from the effective axial thermal expansion coefficient of the annular sealing element.

12. Pressure sensor as claimed in one of the Claims 9 to 11, which is an absolute pressure sensor or a gauge pressure sensor, wherein the reference pressure is vacuum pressure or atmospheric pressure.

13. Pressure sensor as claimed in one of the Claims 9 to 11, which is a differential pressure sensor, wherein the pressure sensor body further comprises a second pressure reception surface to which a second pressure can be applied, wherein the pressure sensor body further comprises a second sealing surface which surrounds the second pressure reception surface in an annular manner, wherein the transducer is provided to supply a signal which depends on a difference between the first pressure present at the first pressure reception surface and the reference pressure present at the second pressure reception surface,

wherein the differential pressure sensor further comprises a second pressure opening in a connection body and a second sealing counterface, wherein the second sealing counterface surrounds the second pressure opening in an annular manner, and

wherein the differential pressure sensor further comprises a second sealing ring as claimed in one of the Claims 1 to 8, wherein the second sealing ring is tensioned in a sealing, axial manner between the second sealing surface and the second counter-sealing surface such that a second pressure can be applied to the second pressure reception surface as a reference pressure through the second pressure opening.

14. Differential pressure sensor as claimed in Claim 13, wherein the second pressure opening and the second sealing counterface are arranged on the first connection body in a coplanar arrangement in relation to the first pressure opening and the first sealing counterface.

15. Differential pressure sensor as claimed in Claim 13, further comprising a second connection body which has the second pressure opening and the second sealing counterface, wherein the sensor body is clamped in an axial manner between the first connection body and the second sensor body.

**Revendications**

1. Bague d'étanchéité destinée à assurer l'étanchéité dans un état serré dans la direction axiale, comprenant :

un élément d'étanchéité annulaire présentant un premier matériau avec un premier coefficient de dilatation thermique linéaire $\alpha_1$,

un dispositif de guidage annulaire, qui définit au moins une barrière radiale pour la surface annulaire équatoriale d'un volume que peut adopter l'élément d'étanchéité, l'étendue de la surface annulaire équatoriale présentant un coefficient de dilatation thermique surfacique $\beta$ s'élevant à plus du double, notamment à au moins deux fois et demi le premier coefficient de dilatation thermique linéaire,

si bien qu'un coefficient de dilatation thermique effectif axial de l'élément d'étanchéité annulaire est inférieur au coefficient de dilatation thermique linéaire, notamment inférieur à la moitié du premier coefficient de dilatation linéaire, de préférence inférieur à 30 ppm/K et particulièrement de préférence inférieur à 20 ppm/K.

2. Bague d'étanchéité selon la revendication 1,

pour laquelle le dispositif de guidage comporte une bague de guidage radiale intérieure,

pour laquelle la bague de guidage intérieure présente une surface de délimitation radiale intérieure pour l'élément d'étanchéité,

pour laquelle la bague d'étanchéité intérieure présente un deuxième matériau avec un deuxième coefficient de dilatation thermique linéaire $\alpha_2$,

pour laquelle le dispositif de guidage comprend en outre une bague de guidage radiale extérieure,

pour laquelle la bague de guidage extérieure présente une surface de délimitation radiale extérieure pour l'élément d'étanchéité,

pour laquelle la bague d'étanchéité extérieure présente un troisième matériau avec un troisième coefficient de dilatation thermique linéaire $\alpha_3$, pour laquelle le deuxième coefficient de dilatation thermique $\alpha_2$ est inférieur au troisième coefficient de dilatation thermique $\alpha_3$.

3. Bague d'étanchéité selon la revendication 2,

pour laquelle le troisième coefficient de dilatation thermique $\alpha_3$ est inférieur au premier coefficient de dilatation thermique linéaire $\alpha_1$,

pour laquelle il existe la relation suivante entre un rayon extérieur effectif $R_a$ de la surface de délimitation extérieure et un rayon intérieur effectif $R_i$ de la surface de délimitation intérieure :

$$R_a/R_i - 1 = K \cdot [(\text{ROOT } (\alpha_1 - 2/3\alpha_2 - 1/3\alpha_3) / (\alpha_1 - \alpha_3)) - 1]$$

avec $0{,}67 < K < 1{,}5$, notamment $0{,}8 < K < 1{,}25$, de préférence $0{,}9 < K < 1{,}1$ et particulièrement de préférence $0{,}95 < K < 1{,}05$.

4. Bague d'étanchéité selon la revendication 2 ou 3, pour laquelle le deuxième matériau comprend un matériau en céramique ou en verre, et/ou pour laquelle le deuxième coefficient de dilatation thermique $\alpha_2$ n'est pas supérieur à 8 ppm/K, notamment pas supérieur à 5 ppm/K et de préférence pas supérieur à 3,5 ppm/K.

5. Bague d'étanchéité selon la revendication 2, 3 ou 4, pour laquelle le troisième matériau comprend un matériau métallique, notamment de l'acier inoxydable, et/ou pour laquelle le troisième coefficient de dilatation thermique $\alpha_3$ n'est pas inférieur à 14 ppm/K, notamment pas inférieur à 15 ppm/K et de préférence pas inférieur à 16 ppm/K.

6. Bague d'étanchéité selon l'une des revendications précédentes, pour laquelle le premier matériau comporte un polymère, et/ou pour laquelle le deuxième coefficient de dilatation thermique $\alpha_2$ n'est pas inférieur à 80 ppm/K et pas supérieur à 200 ppm/K, notamment pas supérieur à 150 ppm/K.

7. Bague d'étanchéité selon la revendication 6, pour laquelle le premier matériau comprend un fluoropolymère, notamment le PTFE ou le PFA.

8. Bague d'étanchéité selon la revendication 1, pour laquelle le premier matériau comprend un élastomère,

pour laquelle le dispositif de guidage comporte une bague de guidage radiale intérieure,

pour laquelle la bague de guidage intérieure présente une surface de délimitation radiale intérieure pour l'élément d'étanchéité,

pour laquelle la bague d'étanchéité intérieure présente un deuxième matériau avec un deuxième coefficient de dilatation thermique linéaire $\alpha_2$, lequel est inférieur au premier coefficient de dilatation thermique linéaire $\alpha_1$,

pour laquelle la bague d'étanchéité est spécifiée pour une plage de température allant jusqu'à une température

maximale T$_{max}$,
pour laquelle la bague de guidage intérieure précontraint dans le sens radial l'élément d'étanchéité, de telle sorte que l'élément de guidage repose contre l'élément d'étanchéité au moins jusqu'à une température T$_{max}$ - 20 K, de préférence jusqu'à une température T$_{max}$,

9. Transmetteur de pression, comprenant :

un capteur de pression avec
un corps de capteur de pression présentant au moins une première surface de réception de pression, laquelle peut être alimentée avec une première pression, le corps de capteur de pression présentant en outre une première surface d'étanchéité, qui entoure de façon annulaire la première surface de réception de pression, et avec un transducteur destiné à la mise à disposition d'un signal, qui dépend d'une différence entre la première pression appliquée à la surface de réception de pression et une pression de référence,
au moins un premier corps de raccordement présentant un premier orifice de pression et une première contre-surface d'étanchéité, la première contre-surface d'étanchéité entourant de façon annulaire le premier orifice de pression, et
au moins une première bague d'étanchéité selon l'une des revendications 1 à 8, la première bague d'étanchéité étant serrée de façon étanche dans le sens axial entre la première surface d'étanchéité et la première contre-surface d'étanchéité, de telle sorte que la première surface de réception de pression puisse être alimentée avec la première pression à travers le premier orifice de pression.

10. Transmetteur de pression selon la revendication 9, pour lequel le corps de raccordement et le corps de capteur présentent chacun un matériau métallique, notamment un matériau dont le coefficient de dilatation thermique ne diffère pas de plus de 4 ppm/K, de préférence de pas plus de 2 ppm/K, du troisième matériau de la bague d'étanchéité conforme à l'invention.

11. Transmetteur de pression selon la revendication 9 ou 10, pour lequel est définie une distance axiale entre la première surface d'étanchéité et la première contre-surface d'étanchéité, laquelle distance présente un coefficient de dilatation thermique linéaire effectif qui ne diffère de pas plus de 8 ppm/K, de préférence de pas plus de 4 ppm/K et particulièrement de préférence de pas plus de 2 ppm/K du coefficient de dilatation thermique axial de l'élément d'étanchéité annulaire.

12. Transmetteur de pression selon l'une des revendications 9 à 11, lequel est un transmetteur de pression absolue ou relative, la pression de référence étant la pression du vide ou la pression atmosphérique.

13. Transmetteur de pression selon l'une des revendications 9 à 11, lequel est un transmetteur de pression différentielle, le corps de capteur de pression présentant en outre une deuxième surface de réception de pression, laquelle peut être alimentée avec une deuxième pression, le corps de capteur de pression comprenant en outre une deuxième surface d'étanchéité, laquelle entoure de façon annulaire la deuxième surface de réception de pression, le transducteur prévu étant destiné à mettre à disposition un signal qui dépend d'une différence entre la première pression appliquée à la première surface de réception de pression et la pression de référence appliquée à la deuxième surface de pression, pour lequel le transmetteur de pression différentielle comprend en outre un deuxième orifice de pression dans un corps de raccordement et une deuxième contre-surface d'étanchéité, la deuxième contre-surface d'étanchéité entourant de façon annulaire le deuxième orifice de pression, et pour lequel le transmetteur de pression différentielle comprend en outre une deuxième bague d'étanchéité selon l'une des revendications 1 à 8, la deuxième bague d'étanchéité entre la deuxième surface d'étanchéité et la deuxième contre-surface d'étanchéité étant serrée de façon étanche dans le sens axial, de telle sorte que la deuxième surface de réception de pression puisse être alimentée avec une deuxième pression en tant que pression de référence à travers le deuxième orifice de pression.

14. Transmetteur de pression selon la revendication 13, pour lequel le deuxième orifice de pression et la deuxième contre-surface d'étanchéité sont disposés sur le premier corps de raccordement selon une disposition coplanaire par rapport au premier orifice de pression et par rapport à la première contre-surface d'étanchéité.

15. Transmetteur de pression différentielle selon la revendication 13, comprenant en outre un deuxième corps de raccordement, lequel corps comporte le deuxième orifice de pression et la deuxième contre-surface d'étanchéité, le corps de capteur étant serré en direction axiale entre le premier corps de raccordement et le deuxième corps de capteur.

EP 2 920 495 B1

**Fig. 1**

11

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1134096 A
- WO 2011154209 A
- DE 102012102834 A